(19) Europäisches Patentamt
European Patent Office
Office européen des brevets

(11) EP 4 671 738 A1

(12) EUROPEAN PATENT APPLICATION
published in accordance with Art. 153(4) EPC

(43) Date of publication:
31.12.2025 Bulletin 2026/01

(51) International Patent Classification (IPC):
G01N 21/3581 (2014.01)    G01N 21/41 (2006.01)
G01N 21/3563 (2014.01)    G02B 6/122 (2006.01)
H04B 1/04 (2006.01)

(21) Application number: 24760179.2

(22) Date of filing: 09.02.2024

(52) Cooperative Patent Classification (CPC):
G01N 21/3563; G01N 21/3581; G01N 21/41;
G02B 6/122; H04B 1/04

(86) International application number:
PCT/JP2024/004582

(87) International publication number:
WO 2024/176877 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.02.2023 JP 2023027731

(71) Applicants:
• The University of Osaka
Osaka 565-0871 (JP)
• Daicel Corporation
Osaka-shi, Osaka 530-0011 (JP)

(72) Inventors:
• FUJITA, Masayuki
Suita-shi, Osaka 565-0871 (JP)
• NAGATSUMA, Tadao
Suita-shi, Osaka 565-0871 (JP)
• WEBBER, Julian Leonard
Suita-shi, Osaka 565-0871 (JP)
• HAGA, Motoharu
Tokyo 108-8230 (JP)

(74) Representative: Grünecker Patent- und
Rechtsanwälte
PartG mbB
Leopoldstraße 4
80802 München (DE)

(54) TERAHERTZ WAVE TRANSMISSION CIRCUIT, TERAHERTZ WAVE DEVICE, AND METHOD FOR MEASURING PHYSICAL PROPERTY OF DIELECTRIC

(57) To appropriately measure a physical property of a dielectric with respect to a terahertz wave. To realize a transmission circuit suitable for transmission in a terahertz band. A terahertz wave transmission circuit (2) includes an input portion (11) to which a terahertz wave is input and which is formed of a dielectric, a transmission path (12) connected to the input portion and formed of a dielectric, and a resonator structure (13) optically coupled to the transmission path and formed of a dielectric.

FIG. 1

## Description

Technical Field

The present invention relates to a terahertz wave transmission circuit, a terahertz wave device, and a method for measuring a physical property of a dielectric.

Background Art

Non-Patent Literature 1 discloses a method for measuring a physical property of a dielectric with respect to terahertz waves, which is called time-domain spectroscopy.

Citation List

Non-Patent Literature

Non-Patent Literature 1: Mira Naftaly et. al., "Terahertz Time-Domain Spectroscopy for Material Characterization", Proceedings of the IEEE, p. 1658 to 1665, vol. 95, No. 8, August 2007

Summary of Invention

Technical Problem

However, the technique described in Non-Patent Literature 1 has a problem that it is difficult to evaluate the physical property with high accuracy depending on the frequency.

When the frequency of a signal is increased to the terahertz band, a loss is increased in a metal transmission circuit.

An object of an aspect of the present invention is to appropriately measure a physical property of a dielectric with respect to terahertz waves, and to realize a transmission circuit suitable for transmission of a signal in a terahertz band.

Solution to Problem

A terahertz wave transmission circuit according to an aspect of the present invention includes: an input portion to which a terahertz wave is input, the input portion being formed of a dielectric; a transmission path connected to the input portion, and formed of a dielectric; and a resonator structure optically coupled to the transmission path, and formed of a dielectric.

A terahertz wave device according to an aspect of the present invention includes: an input portion to which a terahertz wave is input, the input portion being formed of a dielectric, a transmission path connected to the input portion, having a twisted structure, and formed of a dielectric; an output portion connected to the transmission path, configured to output the terahertz wave, and formed of a dielectric; a first waveguide portion configured to input, to the input portion, the terahertz wave polarized in a first direction; and a second waveguide portion configured to extract, from the output portion, the terahertz wave polarized in a second direction different from the first direction.

Advantageous Effects of Invention

According to an aspect of the present invention, it is possible to appropriately determine a physical property of a dielectric with respect to terahertz waves. Further, a terahertz wave transmission circuit can be used as a transmission circuit suitable for transmission of a signal in the terahertz band.

Brief Description of Drawings

FIG. 1 is a plan view illustrating a configuration of a terahertz wave device according to an embodiment.
FIG. 2 is an enlarged perspective view illustrating the periphery of an input portion.
FIG. 3 is a diagram illustrating a flow of measurement of the transmittance of a terahertz wave transmission circuit.
FIG. 4 is a diagram illustrating a flow of measurement of the refractive index and the dielectric loss tangent of the terahertz wave transmission circuit.
FIG. 5 is a diagram showing an example of a change in the transmittance of the terahertz wave transmission circuit with respect to frequency.
FIG. 6 is a diagram showing electromagnetic-field simulation results for a change in the transmittance of the terahertz wave transmission circuit with respect to frequency.
FIG. 7 is a diagram showing a correspondence relationship between the refractive index and the FSR obtained from the electromagnetic-field simulation results shown in FIG. 6.
FIG. 8 is a diagram showing electromagnetic-field simulation results for a change in the transmittance of the terahertz wave transmission circuit with respect to frequency.
FIG. 9 is a diagram showing a correspondence relationship between the dielectric loss tangent $\tan \delta$ and a Q value obtained from the electromagnetic-field simulation results shown in FIG. 8.
FIG. 10 is a plan view illustrating a configuration of a terahertz wave transmission circuit according to a modification.
FIG. 11 is a plan view illustrating a configuration of a terahertz wave transmission circuit according to a modification.
FIG. 12 is a plan view illustrating a configuration of a terahertz wave transmission circuit according to a modification.

FIG. 13 is a plan view illustrating a configuration of a terahertz wave transmission circuit according to a modification.

FIG. 14 is a plan view illustrating a configuration of a terahertz wave transmission circuit according to a modification.

FIG. 15 is a plan view illustrating a configuration of a terahertz wave transmission circuit according to a modification.

FIG. 16 is a diagram illustrating an example of an electromagnetic-field simulation result for a change in the reflectance of the terahertz wave transmission circuit with respect to frequency.

FIG. 17 is a perspective view illustrating a configuration of a terahertz wave device according to an embodiment.

FIG. 18 is a diagram showing electromagnetic-field simulation results for a change in the transmittance of the terahertz wave transmission circuit with respect to frequency.

FIG. 19 is a perspective view illustrating a configuration of a terahertz wave device according to an embodiment.

FIG. 20 is a diagram showing an electromagnetic-field simulation result for a change in the transmittance of the terahertz wave transmission circuit in the terahertz wave device with respect to frequency.

FIG. 21 is a diagram showing an example of a measurement result for a change in the transmittance of the terahertz wave transmission circuit with respect to frequency.

Description of Embodiments

In the present specification, terahertz waves mean electromagnetic waves having a frequency in a terahertz band. As an example, the frequency in the terahertz band may be from 0.1 THz to 10 THz. The frequency in the terahertz band may typically be, for example, from 0.1 THz to 1 THz, and may more typically be from 0.1 THz to 0.4 THz.

For transmission of a signal in the terahertz band, a dielectric transmission circuit is more advantageous than a metal transmission circuit because a loss is smaller in the dielectric transmission circuit. However, in the related art, there has been no method capable of appropriately measuring a physical property of a dielectric with respect to terahertz waves. In a known measurement method, for example, the measurement accuracy is low for a thin film dielectric, or the measurement accuracy is low at a specific frequency. Hereinafter, a method capable of appropriately measuring a physical property of the dielectric with respect to terahertz waves, and a transmission circuit suitable for transmission in the terahertz band will be described.

First Embodiment

Configuration of Terahertz Wave Device

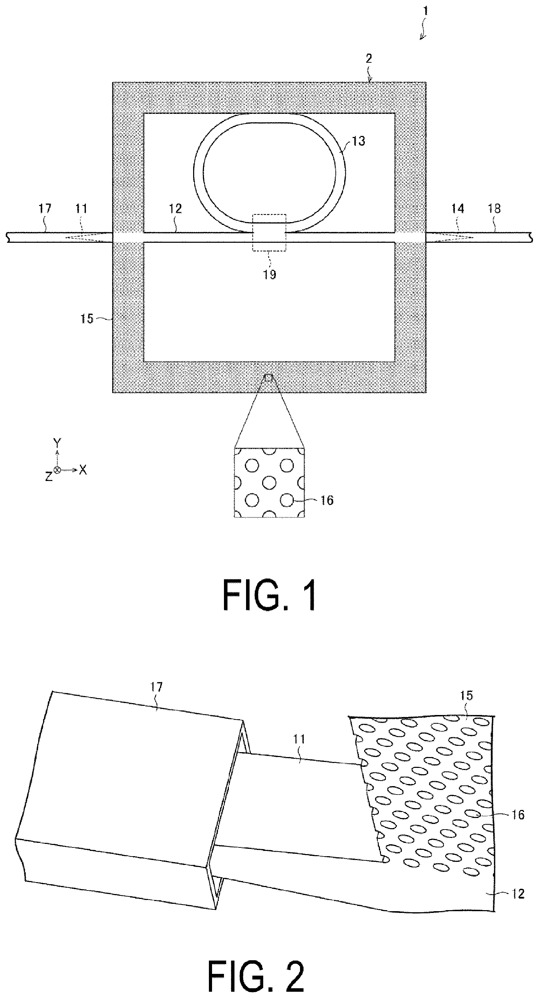

FIG. 1 is a plan view illustrating a configuration of a terahertz wave device 1 of the present embodiment. FIG. 2 is an enlarged perspective view of the periphery of an input portion 11. A support 15 is partially enlarged and illustrated in the lower part of FIG. 1. The terahertz wave device 1 includes a terahertz wave transmission circuit 2, a first waveguide portion 17, and a second waveguide portion 18. The terahertz wave transmission circuit 2 includes the input portion 11, a transmission path 12, a resonator structure 13, an output portion 14, and the support 15. The terahertz wave transmission circuit 2 (the input portion 11, the transmission path 12, the resonator structure 13, the output portion 14, and the support 15) is formed of an integrated dielectric. The terahertz wave transmission circuit 2 has a constant thickness on the Z-axis, and is obtained by processing a dielectric flat plate or by resinmolding using a mold.

In the present embodiment, the physical property (particularly, the refractive index or the dielectric loss tangent) of the dielectric forming the transmission path 12 and the resonator structure 13 with respect to the terahertz waves is measured. In the present embodiment, a resin containing polyoctenylene at 50 w% and bis(vinylphenyl)ethane (BVPE) at 50 w% is used as the dielectric, but the dielectric is not limited thereto.

Examples of the dielectric include glass epoxy resin, glass polyphenylene ether resin, ceramic filler resin, fluororesin, polyoctenylene, silsesquioxane, dimethylpolyphenylene sulfide, vinylphenylethane, alicyclic epoxy, cellulose acetate, polyurethane, cycloolefin copolymer (COC), liquid crystal polymer (LCP), polyphenylene sulfide (PPS), polybutylene terephthalate (PBT), glass fiber-reinforced polyethylene terephthalate (GF-PET), polyacetal (POM), polyamide (PA), polyether ether ketone (PEEK), polymethyl methacrylate resin (PMMA), polyphenylene ether (PPE), polymethacrylimide (PMMI), polyimide (PI), polycarbonate (PC), acrylonitrile butadiene styrene (ABS), polystyrene (PS), styrene acrylonitrile (SAN), polypropylene (PP), or a hybrid resin thereof, or a hybrid resin containing at least one of the above-mentioned materials and another organic material. Examples of the dielectric include ceramics such as alumina, silicon nitride, and aluminum nitride, and low-temperature co-fired ceramics. Examples of the dielectric include semiconductors such as silicon, germanium, indium phosphide, gallium arsenide, aluminum arsenide, gallium phosphide, and gallium nitride, compound semiconductors containing a plurality of the above-mentioned constituent elements, silicon carbide, and diamond. As described above, not only an insulator, but also a semiconductor may be used as the dielectric.

The input portion 11 is a portion to which the terahertz waves are input. The input portion 11 has a tapered shape in which the width on the Y-axis decreases toward the tip. Since the input portion 11 has the tapered shape, impedance matching is achieved, reflection is reduced, and the loss of the terahertz waves at the time of input can be reduced. The length of the tapered shape of the input portion 11 in the X direction is preferably equal to or greater than the wavelength of the terahertz waves. However, the structure of the input portion 11 is not limited to this, and the input portion 11 may have any shape. For example, an end surface of the input portion 11 may be a flat surface perpendicular to a traveling direction of the input terahertz waves.

The transmission path 12 is a portion through which the terahertz waves are transmitted. One end of the transmission path 12 is connected to the input portion 11. The transmission path 12 extends linearly along the X-axis.

The resonator structure 13 is a portion that functions as a resonator in which resonance occurs for the terahertz waves having a predetermined frequency. The resonator structure 13 is optically coupled to the transmission path 12 at a coupling portion 19. The term "optically coupled" means that the terahertz waves transmitted through the transmission path 12 partially propagate to the resonator structure 13 at the coupling portion 19. Similarly, the terahertz waves in the resonator structure 13 partially propagate to the transmission path 12. Here, the resonator structure 13 is mechanically connected to the transmission path 12 at the coupling portion 19. However, the configuration is not limited to this, and a gap less than the wavelength of the terahertz waves may be present between the resonator structure 13 and the transmission path 12. Even in this case, the terahertz waves partially propagate between the resonator structure 13 and the transmission path 12. Taking into account the propagation, the coupling portion 19 at which the resonator structure 13 and the transmission path 12 are coupled to each other preferably has a length (length along the X-axis) twice or more the wavelength of the terahertz waves in the dielectric.

The resonator structure 13 has a ring-shaped structure. Here, the resonator structure 13 has a shape in which a pair of semicircles and a pair of parallel line segments are connected to each other. The resonant frequency is decided on depending on the length of the ring of the resonator structure 13.

The output portion 14 is a portion that outputs the terahertz waves. The output portion 14 is connected to the other end of the transmission path 12. The output portion 14 has a tapered shape in which the width on the Y-axis decreases toward the tip. The length of the tapered shape of the output portion 14 in the X direction is preferably equal to or greater than the wavelength of the terahertz waves. However, the structure of the output portion 14 is not limited thereto, and the output portion 14 may have any shape. For example, an end surface of the output portion 14 may be a flat surface perpendicular to the traveling direction of the input terahertz waves.

The support 15 supports the input portion 11, the transmission path 12, the resonator structure 13, or the output portion 14. Here, the support 15 is a rectangular frame. The support 15 is connected to both the ends of the transmission path 12. Further, the support 15 is connected to a part of the resonator structure 13. A plurality of pores 16 are formed in a boundary region of the support 15 bordering at least the input portion 11, the transmission path 12, the resonator structure 13, or the output portion 14. In the boundary region, the plurality of pores 16 are arranged at a pitch less than the wavelength of the terahertz waves in the dielectric, and are more preferably arranged at a pitch less than one fourth of the wavelength. The plurality of pores 16 may be arrayed in a triangular lattice pattern, a square lattice pattern, or an irregular pattern. The shape of each of the plurality of pores 16 is not limited to a circular shape, and may be any shape. The plurality of pores 16 are formed in the boundary region. Thus, it is possible to reduce leakage of the terahertz waves to the support 15 from the input portion 11, the transmission path 12, the resonator structure 13, or the output portion 14. Here, the plurality of pores 16 are formed in the entire support 15. The support 15 can be mechanically fixed by any other component to fix the position of the terahertz wave transmission circuit 2. Even if the other component comes into contact with the support 15, since the terahertz waves hardly leak to the support 15, the transmission of the terahertz waves is not affected.

The first waveguide portion 17 inputs, to the input portion 11, the terahertz waves from a circuit (an external electronic device or an external space) outside the terahertz wave transmission circuit 2. The first waveguide portion 17 is formed of, for example, a conductor. Here, the first waveguide portion 17 is a rectangular hollow waveguide made of metal. A part of the input portion 11 is disposed in the first waveguide portion 17. The first waveguide portion 17 is not in contact with the input portion 11.

The second waveguide portion 18 receives the terahertz waves output from the output portion 14 and transmits the terahertz waves to a circuit outside the terahertz wave transmission circuit 2. The second waveguide portion 18 is formed of, for example, a conductor. Here, the second waveguide portion 18 is a rectangular hollow waveguide made of metal. A part of the output portion 14 is disposed in the second waveguide portion 18. The second waveguide portion 18 is not in contact with the output portion 14.

Note that the first waveguide portion 17 and the second waveguide portion 18 may be in contact with the input portion 11 and the output portion 14, respectively. For example, the support 15 may be omitted, and the input portion 11 and the output portion 14 may be supported by the first waveguide portion 17 and the second waveguide portion 18.

Method for Measuring Physical Property

In a method for measuring a physical property according to the present embodiment, a change in the transmittance of the terahertz wave transmission circuit 2 with respect to frequency is measured. From the change in the transmittance with respect to frequency, the refractive index and the dielectric loss tangent are determined as the physical properties of the dielectric constituting the terahertz wave transmission circuit 2.

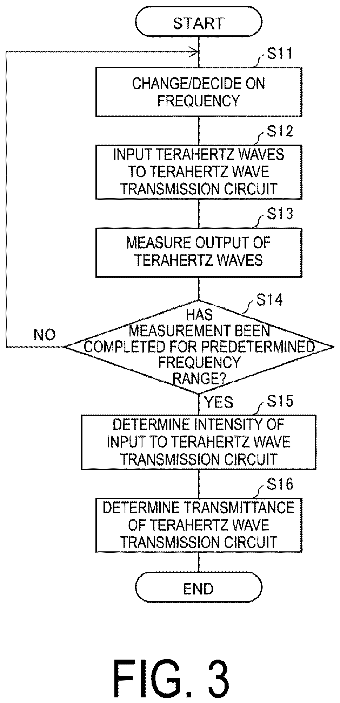

FIG. 3 is a diagram illustrating a flow of measurement of the transmittance of the terahertz wave transmission circuit 2. The transmittance of the terahertz wave transmission circuit 2 is (an output from the terahertz wave transmission circuit 2/an input to the terahertz wave transmission circuit 2).

First, the frequency of the terahertz waves to be input to the terahertz wave transmission circuit 2 is changed/decided on within a predetermined frequency range (S11). The terahertz waves at the decided frequency are input from the first waveguide portion 17 to the terahertz wave transmission circuit 2 (S12). The intensity of the terahertz waves output from the terahertz wave transmission circuit 2 to the second waveguide portion 18 is measured (S13).

When the measurement has not been completed for the predetermined frequency range (No in S14), the processing returns to S11, and the frequency of the terahertz waves is changed to continue the measurement.

When the measurement has been completed for the predetermined frequency range (Yes in S14), the intensity of the input to the terahertz wave transmission circuit 2 in the predetermined frequency range is determined (S15). For example, the terahertz wave transmission circuit 2 is removed from the terahertz wave device 1, and the intensity of the output of the terahertz waves from the second waveguide portion 18 is measured in a state in which the first waveguide portion 17 and the second waveguide portion 18 are directly connected to each other. The intensity of the output of the terahertz waves measured in this state can be regarded as the intensity of the terahertz waves input to the terahertz wave transmission circuit 2. The intensity of the input to the terahertz wave transmission circuit 2 is determined for each frequency.

The transmittance of the terahertz wave transmission circuit 2 at each frequency is determined by using the intensity of the input to the terahertz wave transmission circuit 2 at each frequency and the intensity of the output from the terahertz wave transmission circuit 2 (S16). Note that the intensity of the terahertz waves input from the first waveguide portion 17 to the terahertz wave transmission circuit 2 may be determined using another method. The physical property (refractive index or dielectric loss tangent) of the dielectric constituting the terahertz wave transmission circuit 2 is determined by using the change in the transmittance of the terahertz wave transmission circuit 2 with respect to frequency.

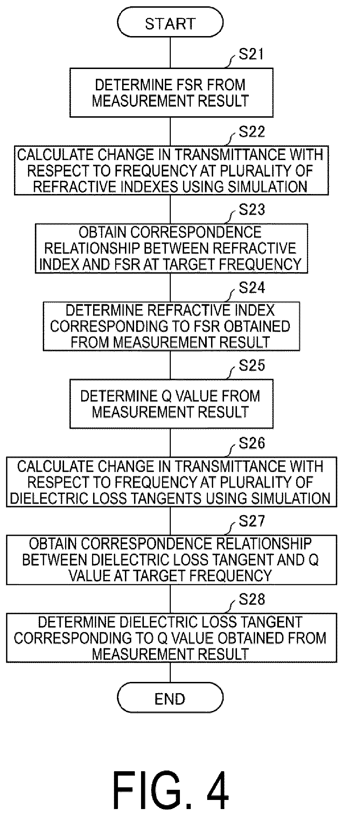

FIG. 4 is a diagram illustrating a flow of measurement of the refractive index and the dielectric loss tangent of the terahertz wave transmission circuit 2. From the measured change in the transmittance of the terahertz wave transmission circuit 2 with respect to frequency (measurement result), the FSR (resonance frequency interval) at a target frequency at which the physical property is desired to be measured is determined (S21).

On the other hand, a computer is used to calculate the change in the transmittance of the terahertz wave transmission circuit 2 with respect to frequency, using a known electromagnetic-field simulation, when the refractive index of the dielectric of the terahertz wave transmission circuit 2 is changed to a plurality of values (S22). Note that, in this electromagnetic-field simulation, the calculation may be performed by setting the dielectric loss tangent to a provisional value. Even if the dielectric loss tangent changes, the FSR is hardly affected. From the simulation result for the change in the transmittance with respect to frequency, a correspondence relationship between the refractive index and the FSR at the target frequency can be obtained (S23). The correspondence relationship between the refractive index and the FSR at the target frequency may be represented in, for example, a table, or may be represented by a curve approximating the simulation result or a mathematical expression representing the curve. The FSR is inversely proportional to the refractive index of the dielectric.

Based on the correspondence relationship between the refractive index and the FSR at the target frequency, the refractive index corresponding to the FSR at the target frequency obtained from the measurement result is determined (S24). In this way, the refractive index of the dielectric constituting the terahertz wave transmission circuit 2 with respect to the terahertz waves at the target frequency can be measured.

Further, a Q value (quality factor) at the target frequency is determined from the measured change in the transmittance of the terahertz wave transmission circuit 2 with respect to frequency (measurement result) (S25).

On the other hand, a computer is used to calculate the change in the transmittance of the terahertz wave transmission circuit 2 with respect to frequency, using a known electromagnetic-field simulation, when the dielectric loss tangent of the dielectric of the terahertz wave transmission circuit 2 is changed to a plurality of values (S26). Note that, in this electromagnetic-field simulation, the refractive index of the dielectric determined earlier is used as the refractive index of the dielectric. From the simulation result for the change in the transmittance with respect to frequency, a correspondence relationship between the dielectric loss tangent and the Q value at the target frequency can be obtained (S27). The correspondence relationship between the dielectric loss tangent and the Q value at the target frequency may be represented in, for example, a table, or may be represented by a curve approximating the simulation result or a mathematical expression representing the curve. The Q value is inversely proportional to the dielectric loss tangent of the dielectric.

Based on the correspondence relationship between the dielectric loss tangent and the Q value at the target frequency, the dielectric loss tangent corresponding to the Q value at the target frequency obtained from the measurement result is determined (S28). In this way, the dielectric loss tangent of the dielectric constituting the terahertz wave transmission circuit 2 with respect to the terahertz waves at the target frequency can be measured.

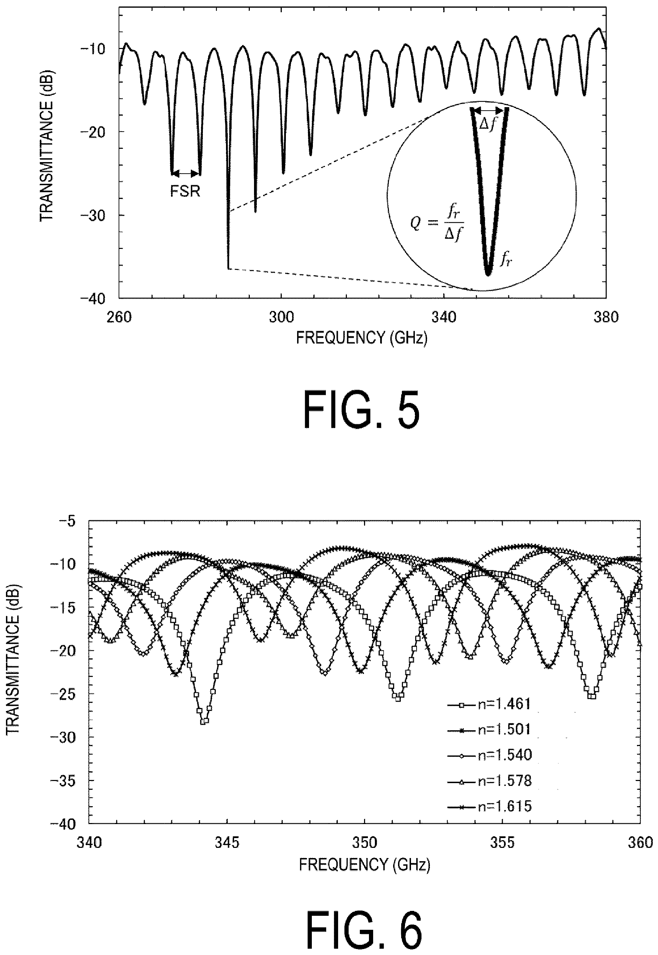

FIG. 5 is a diagram showing an example of frequency changes in the transmittance of the terahertz wave transmission circuit 2 with respect to frequency. The vertical axis represents the transmittance [dB]. When the output from the terahertz wave transmission circuit 2 is the same as the input to the terahertz wave transmission circuit 2, the transmittance is 0 dB. The horizontal axis represents the frequency [GHz] of the terahertz waves.

Since the terahertz wave transmission circuit 2 includes the resonator structure 13, the transmittance exhibits resonance characteristics corresponding to the resonator structure 13. Since the terahertz waves having a frequency at which resonance occurs in the resonator structure 13 attenuate while being confined in the resonator structure 13, a plurality of downward resonance peaks appear in the transmittance. The interval between two of the resonance peaks adjacent to each other with a target frequency interposed therebetween can be regarded as the FSR at the target frequency.

The Q value of the resonance can be read from the downward resonance peak near the target frequency. When the transmittance is T(f) [dB] and the frequency is f, the following expression is established for one resonance peak.

$$T(f) = T_0 + A \cdot \log_{10}\{\Delta f/(4(f - fr)^2 + \Delta f^2)\}$$

$$Q = fr/\Delta f$$

Here, Q is the Q value, fr is the resonance frequency, $\Delta f$ is a full width at half maximum, and $T_0$ is an offset of the transmittance. By fitting T(f), which is a Lorentzian function, to the resonance peak of the measured value of a change in transmittance with respect to frequency, fr and $\Delta f$ are determined. Q is determined from fr and $\Delta f$.

FIG. 6 is a diagram showing electromagnetic-field simulation results for a change in the transmittance of the terahertz wave transmission circuit 2 with respect to frequency. In FIG. 6, the electromagnetic-field simulation results are drawn in an overlapping manner, in which a refractive index n of the dielectric of the terahertz wave transmission circuit 2 is changed to a plurality of values. The vertical axis represents the transmittance [dB]. The horizontal axis represents the frequency [GHz] of the terahertz waves. As can be seen from the diagram, as the refractive index n increases, the FSR decreases. In view of this, the correspondence relationship between the refractive index n and the FSR can be obtained.

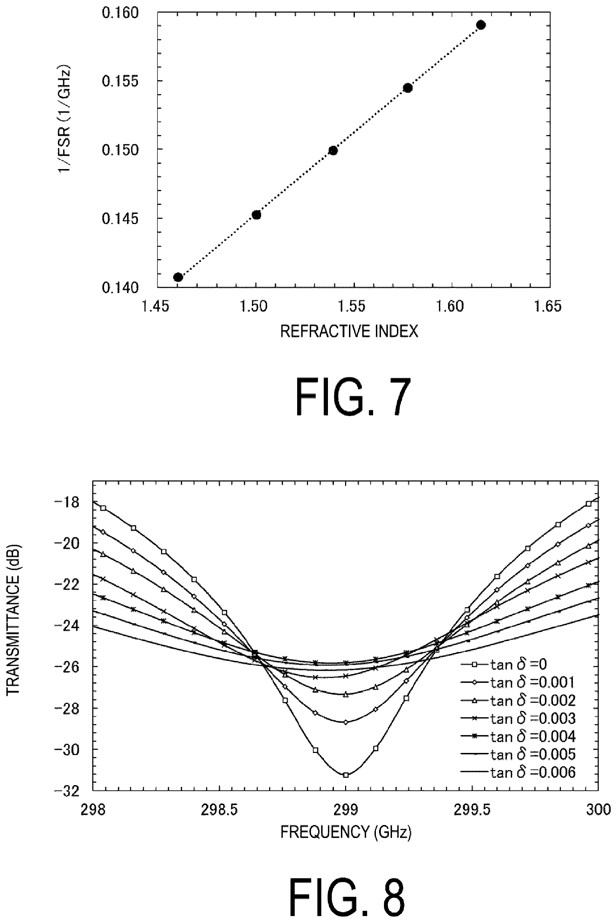

FIG. 7 is a diagram showing a correspondence relationship between the refractive index and the FSR obtained from the electromagnetic-field simulation results shown in FIG. 6. The vertical axis represents the reciprocal of the FSR [1/GHz]. The horizontal axis represents the refractive index n. The FSR and the refractive index are inversely proportional to each other. Thus, the reciprocal of the FSR and the refractive index have a linear relationship. The straight line in the diagram is a straight line approximating points obtained from the plurality of electromagnetic-field simulation results. By using this correspondence relationship between the FSR and the refractive index, based on the FSR read from the measured value, the refractive index of the dielectric constituting the terahertz wave transmission circuit 2 can be determined. The determined refractive index is a physical property of the dielectric itself, which does not depend on the shape of the terahertz wave transmission circuit 2.

FIG. 8 is a diagram showing electromagnetic-field simulation results for a change in the transmittance of the terahertz wave transmission circuit 2 with respect to frequency. In FIG. 8, the electromagnetic-field simulation results are drawn in an overlapping manner, in which the dielectric loss tangent tan $\delta$ of the dielectric of the terahertz wave transmission circuit 2 is changed to a plurality of values. The vertical axis represents the transmittance [dB]. The horizontal axis represents the frequency [GHz] of the terahertz waves. As can be seen from the diagram, as the dielectric loss tangent tan $\delta$ decreases, the resonance peak becomes sharper. That is, the Q value increases as the dielectric loss tangent tan $\delta$ decreases. In view of this, the correspondence relationship between the dielectric loss tangent tan $\delta$ and the Q value can be obtained.

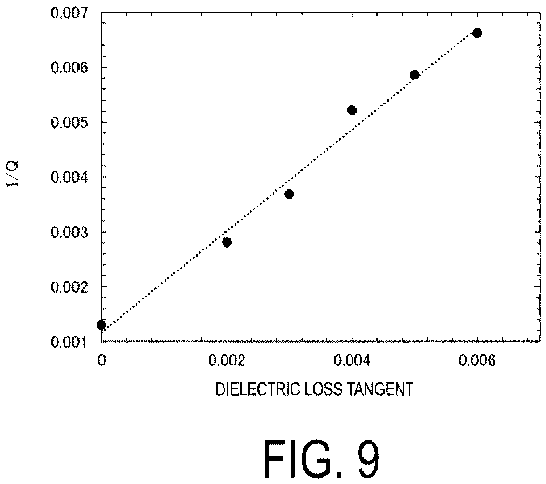

FIG. 9 is a diagram showing a correspondence relationship between the dielectric loss tangent tan $\delta$ and the Q value obtained from the electromagnetic-field simulation results shown in FIG. 8. The vertical axis represents the reciprocal of the Q value. The horizontal axis represents the dielectric loss tangent tan $\delta$. The reciprocal of the Q value and the dielectric loss tangent tan $\delta$ are in a linear relationship. The straight line in the diagram is a straight line approximating points obtained from the plurality of electromagnetic-field simulation results. By using the correspondence relationship between the Q value and the dielectric loss tangent tan $\delta$, based on the Q value read from the measured value, the dielectric loss tangent tan $\delta$ of the dielectric constituting the terahertz wave transmission circuit 2 can be determined. The determined dielectric loss tangent tan $\delta$ is a physical property of the dielectric itself, which does not depend on the shape of the terahertz wave transmission circuit 2.

In this way, the physical property (refractive index or dielectric loss tangent) of the dielectric as a material, which does not depend on the shape of the terahertz wave transmission circuit 2, can be measured using the terahertz wave transmission circuit 2 provided with the resonator structure 13. Further, the terahertz wave transmission circuit 2 itself can be used as a circuit for transmitting the terahertz waves. Downward resonance peaks corresponding to the resonator structure 13 appear in the transmittance of the terahertz wave transmission circuit 2. Therefore, the terahertz wave transmission circuit 2 can be used as a filter circuit that transmits or shields against terahertz waves having a frequency in a specific range.

Note that, when a resin used for manufacturing the terahertz wave transmission circuit 2 is not used for measuring the physical property of the dielectric, but used as a resin for a printed wiring board, the dielectric preferably contains a thermosetting resin from the viewpoint of heat resistance in solder reflow. Examples of the resin having a relatively low dielectric loss tangent include polyoctenylene, PPS, LCP, PS, and PP. By adding another organic material or the like (for example, a thermosetting or heat-resistant resin) to the resin having a relatively low dielectric loss tangent, a resin having thermosetting properties and a relatively low dielectric loss tangent can be obtained. A resin containing polyoctenylene and BVPE is an example of the resin having thermosetting properties and a relatively low dielectric loss tangent. Such a resin can be suitably used for a printed wiring board that transmits a signal in the terahertz band.

Note that, in the above description, a mode has been explained in which the physical property of the dielectric is determined by measuring the transmittance of the terahertz wave transmission circuit 2. The configuration is not limited to this, and the physical property of the dielectric may be determined by measuring the reflectance of the terahertz wave transmission circuit 2. For example, the terahertz wave device 1 from which the second waveguide portion 18 has been removed is used. Similarly to the configuration described above, when terahertz waves are input to the input portion 11, the terahertz waves are reflected at the other end of the transmission path 12 (output portion 14), and the terahertz waves are output from the input portion 11. In this case, the input portion 11 functions as an input/output portion. The input and the output are separated on the first waveguide portion 17 side, and the intensity of the output of the terahertz waves can be measured. A value obtained by dividing the intensity of the output of the terahertz waves by the intensity of the input of the terahertz waves is the reflectance of the terahertz wave transmission circuit 2. The reflectance of the terahertz wave transmission circuit 2 also exhibits resonance characteristics corresponding to the resonator structure 13, similarly to the transmittance. That is, in a similar manner to the method described above, the FSR or the Q value is determined from a change in the reflectance of the terahertz wave transmission circuit 2 with respect to frequency, and the refractive index or the dielectric loss tangent of the dielectric can be determined by comparing the FSR or the Q value with simulation results.

Modifications

Hereinafter, other modifications of the present invention will be described. Note that, for convenience of description, members having the same functions as those of the members already described are denoted by the same reference signs, and description thereof will not be repeated.

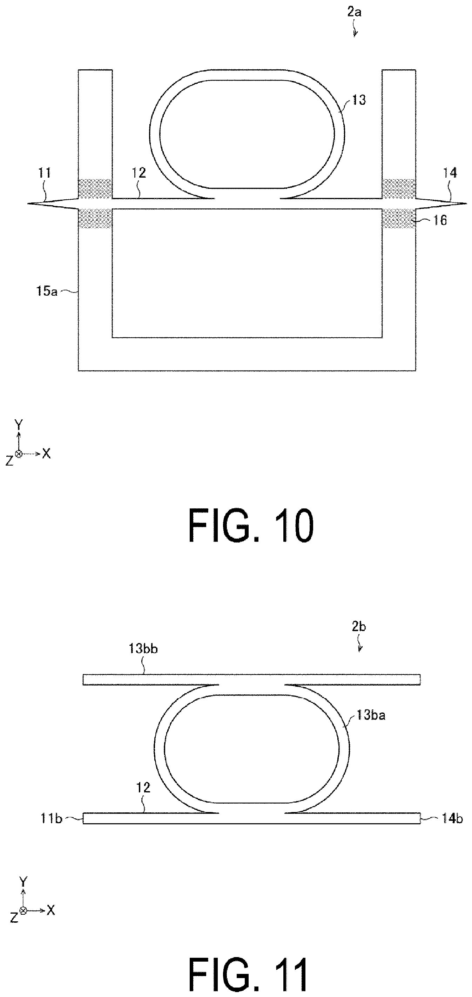

FIG. 10 is a plan view illustrating a configuration of a terahertz wave transmission circuit 2a according to a modification. The terahertz wave transmission circuit 2a includes the input portion 11, the transmission path 12, the resonator structure 13, the output portion 14, and a support 15a. The terahertz wave transmission circuit 2a is formed of an integrated dielectric. Here, the support 15a is U-shaped. The support 15a is connected to the transmission path 12, but is not connected to the resonator structure 13. The plurality of pores 16 are formed in boundary regions of the support 15a bordering the transmission path 12. The pores 16 may not necessarily be formed in regions other than the boundary regions of the support 15a.

FIG. 11 is a plan view illustrating a configuration of a terahertz wave transmission circuit 2b according to a modification. The terahertz wave transmission circuit 2b includes an input portion 11b, the transmission path 12, a first resonator structure 13ba, a second resonator structure 13bb, and an output portion 14b. The input portion 11b and the output portion 14b may not be tapered but may be rectangular parallelepipeds. The first resonator structure 13ba having a ring shape is connected to the transmission path 12. The second resonator structure 13bb having a linear shape is connected to the first resonator structure 13ba having a ring shape on the opposite side to the transmission path 12. The terahertz waves are reflected at one end and the other end of the second resonator structure 13bb. Therefore, resonance according to the length of the second resonator structure 13bb occurs. Note that one end of the second resonator structure 13bb may function as an output portion. A second waveguide portion may be provided at one end of the second resonator structure 13bb, and the terahertz waves may be output from the second resonator structure 13bb. In this case, the second waveguide portion may or may not be provided at the output portion 14b. One or both ends of the second resonator structure 13bb may be tapered.

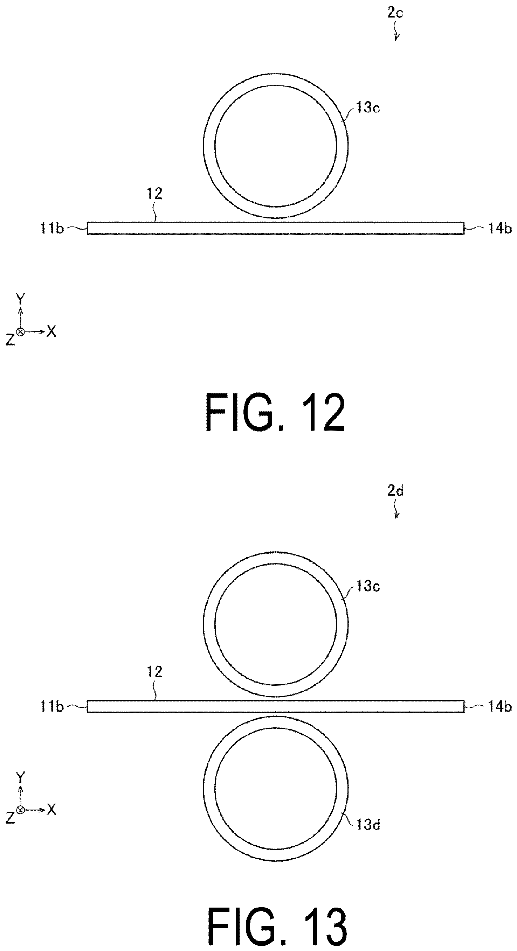

FIG. 12 is a plan view illustrating a configuration of a terahertz wave transmission circuit 2c according to a modification. The terahertz wave transmission circuit 2c includes the input portion 11b, the transmission path 12, a resonator structure 13c, and the output portion 14b. The resonator structure 13c has a circular shape. The resonator structure 13c may not necessarily be in contact with the transmission path 12. The spacing between the resonator structure 13c and the transmission path 12 is preferably less than the wavelength of the terahertz waves.

FIG. 13 is a plan view illustrating a configuration of a terahertz wave transmission circuit 2d according to a modification. The terahertz wave transmission circuit 2d includes the input portion 11b, the transmission path 12, the resonator structure 13c, a resonator structure 13d, and the output portion 14b. The two resonator structures 13c and 13d have the same circular shape. The one resonator structure 13c is located on the positive side of the transmission path 12 in the Y-axis direction, and the other resonator structure 13d is located on the negative side of the transmission path 12 in the Y-axis direction. In this way, a plurality of resonator structures 13c and 13d may be provided for the transmission path 12. The other resonator structure 13d may have a shape different from that of the one resonator structure 13c (a shape having a different resonance frequency).

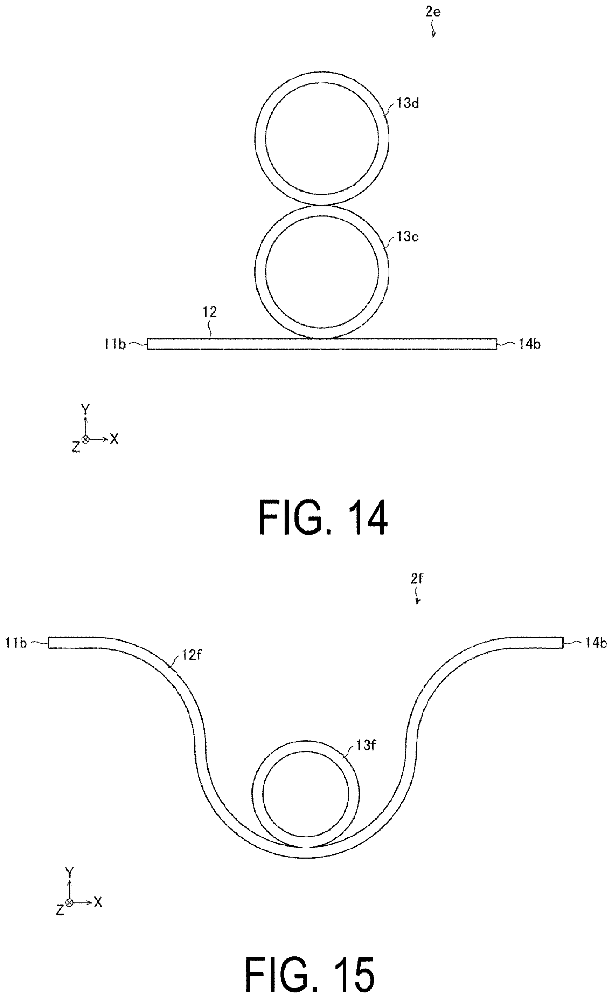

FIG. 14 is a plan view illustrating a configuration of a terahertz wave transmission circuit 2e according to a modification. The terahertz wave transmission circuit 2e includes the input portion 11b, the transmission path 12, the resonator structure 13c, the resonator structure 13d, and the output portion 14b. The resonator structure 13d is connected to the ring-shaped resonator structure 13c on the opposite side to the transmission path 12. By providing a plurality of resonator structures 13c and 13d, the number of types of resonant frequencies increases, and a range of frequencies that can be filtered increases.

FIG. 15 is a plan view illustrating a configuration of a terahertz wave transmission circuit 2f according to a modification. The terahertz wave transmission circuit 2f includes the input portion 11b, a transmission path 12f, a resonator structure 13f, and the output portion 14b. The transmission path 12f has a curved shape. The transmission path 12f has a semicircular portion that is bent to protrude toward the negative side in the Y-axis direction. The resonator structure 13f having a circular shape is disposed inside (on the concave side of) the semicircular portion of the transmission path 12f. The resonator structure 13f may be in contact with the transmission path 12f or may not be in contact with the transmission path 12f.

The resonator structure is not limited to having the ring shape. A linear (straight or curved) branch path extending to branch off from the transmission path also functions as a resonator structure. Further, the resonator structure may be a planar structure instead of a linear structure. For example, the inside of the ring-shaped resonator structure described above may be a solid structure.

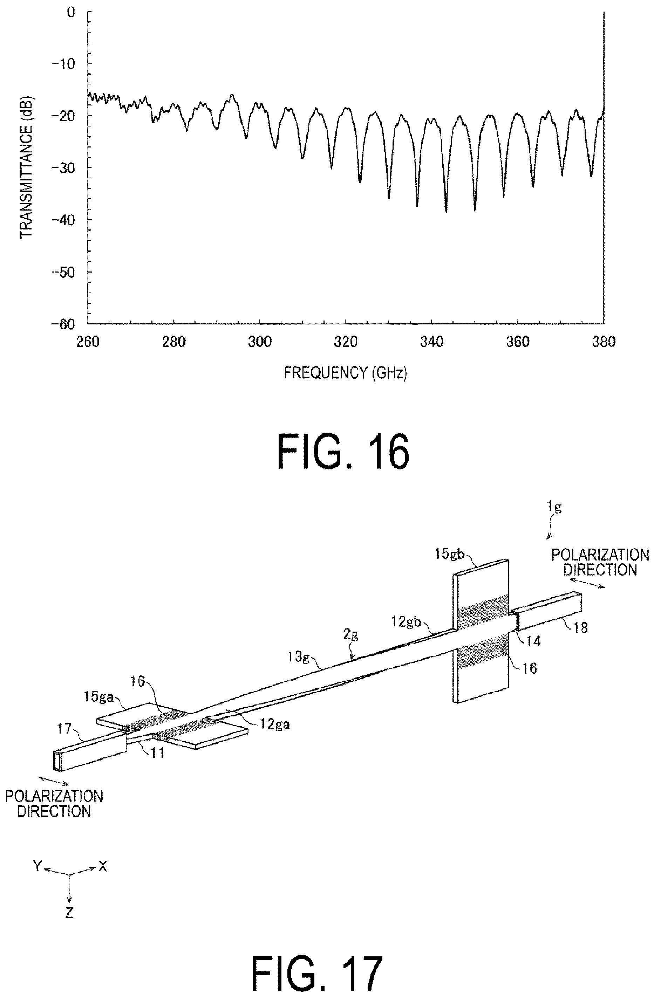

FIG. 16 is a diagram showing an example of an electromagnetic-field simulation result for a change in the reflectance of the terahertz wave transmission circuit 2c with respect to frequency. The vertical axis represents the reflectance [dB]. The horizontal axis represents the frequency [GHz] of the terahertz waves. Terahertz waves were input from the input portion 11b in FIG. 12, and the terahertz waves reflected inside the terahertz wave transmission circuit 2c and output from the input portion 11b were defined as an output. In this way, the resonance characteristics are also observed in the change in reflectance with respect to frequency. As in the case of the transmittance, the reflectance is measured, and the FSR or the Q value is determined from the measured value of the reflectance, and the refractive index or the dielectric loss tangent of the dielectric can be determined by comparing the FSR or the Q value with the simulation result.

Second Embodiment

FIG. 17 is a perspective view illustrating a configuration of a terahertz wave device 1g of the present embodiment. The terahertz wave device 1g includes a terahertz wave transmission circuit 2g, the first waveguide portion 17, and the second waveguide portion 18. The terahertz wave transmission circuit 2g includes the input portion 11, a first transmission path 12ga, a second transmission path 12gb, a resonator structure 13g, the output portion 14, a first support 15ga, and a second support 15gb. The terahertz wave transmission circuit 2g is formed of an integrated dielectric. The terahertz wave transmission circuit 2g is made of a dielectric flat plate having a constant thickness.

The resonator structure 13g is disposed between two transmission paths 12g. The resonator structure 13g has a twisted structure. The twisted structure has, for example, a shape in which a flat plate is twisted. Here, the resonator structure 13g has a shape twisted by 90°, but the shape is not limited to this. It is sufficient that the angle of twist be greater than 0°, and may be 30° or more, 90° or more, or 180° or more. The twist may have a spiral shape that is twisted by one or more rotations. The resonator structure 13g has the twisted shape, and thus the resonator structure 13g functions as a resonator in which resonance occurs for terahertz waves at a predetermined frequency with unidirectional polarization..

The first transmission path 12ga and the second transmission path 12gb are linear flat plate-shaped transmission paths. The plane of the first transmission path 12ga and the plane of the second transmission path 12gb are in a twisted relationship with each other, and are in such a positional relationship that these planes are twisted relative to each other by 90°.

The first support 15ga is connected to the first transmission path 12ga and supports the first transmission path 12ga. The second support 15gb is connected to the second transmission path 12gb and supports the second transmission path 12gb. For example, by holding the first support 15ga and the second support 15gb in a state in which the dielectric flat plate is twisted, the resonator structure 13g can maintain the twisted state.

The first waveguide portion 17 inputs terahertz waves polarized in a first direction to the input portion 11. Here, the first direction is a direction parallel to the Y-axis. The first direction is a width direction of the first transmission path 12ga. The width direction of the first transmission path 12ga is a direction perpendicular to the traveling direction of the terahertz waves among the inplane directions of the flat plate constituting the first transmission path 12ga. The first waveguide portion 17 is a hollow waveguide whose internal cavity has a rectangular cross-sectional shape. The length of the internal cavity in the first direction (Y-axis direction) is shorter than the length thereof in a second direction (Z-axis direction) perpendicular to the first direction.

The second waveguide portion 18 extracts, from the output portion 14, the terahertz waves polarized in the first direction. The second waveguide portion 18 is a hollow waveguide whose internal cavity has a rectangular cross-sectional shape. The length of the internal cavity in the first direction is shorter than the length thereof in the second direction. The first direction is a thickness direction of the second transmission path 12gb. The thickness direction of the second transmission path 12gb is a direction perpendicular to the plane of the flat plate constituting the second transmission path 12gb. The second waveguide portion 18 extracts, from the output portion 14, the terahertz waves in a direction in which the cross-sectional shape of the internal cavity is short (direction along the short side).

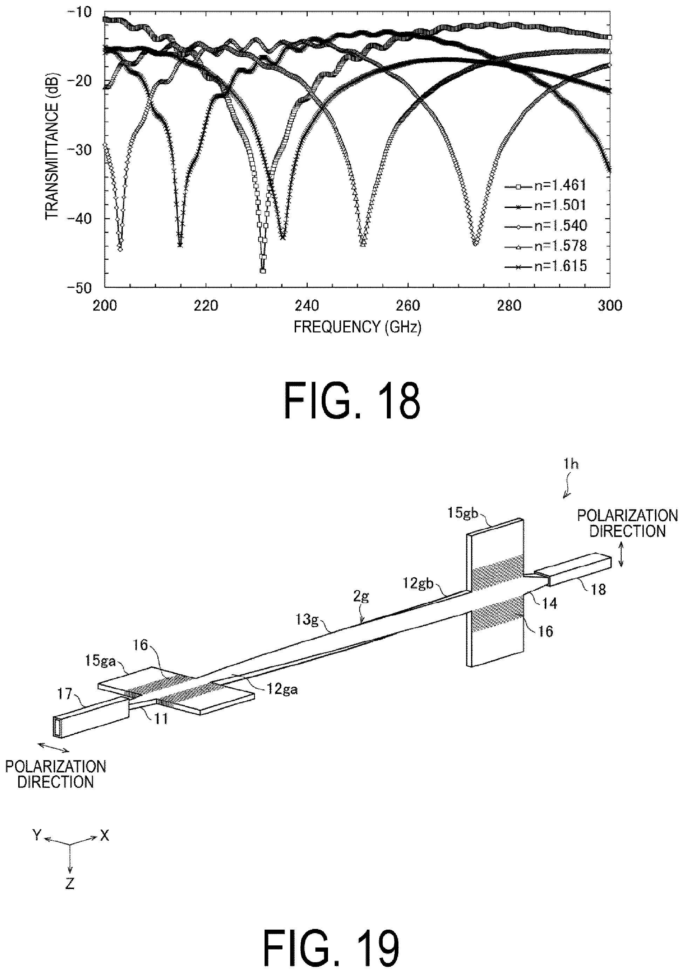

FIG. 18 is a diagram showing electromagnetic-field simulation results for a change in the transmittance of the terahertz wave transmission circuit 2g with respect to frequency. In FIG. 18, the electromagnetic-field simulation results are drawn in an overlapping manner, in which the refractive index n of the dielectric of the terahertz wave transmission circuit 2 is changed to a plurality of values. The vertical axis represents the transmittance [dB]. The horizontal axis represents the frequency [GHz] of the terahertz waves. As in the terahertz wave transmission circuit 2, the terahertz wave transmission circuit 2g also exhibits resonance characteristics in the change in transmittance with respect to frequency. Therefore, the physical property of the dielectric can be measured using the terahertz wave transmission circuit 2g in a similar manner. Further, the terahertz wave transmission circuit 2g can also be used as a filter circuit for polarized terahertz waves.

Third Embodiment

FIG. 19 is a perspective view illustrating a configuration of a terahertz wave device 1h of the present embodiment. The terahertz wave device 1h includes the terahertz wave transmission circuit 2g, the first waveguide portion 17, and the second waveguide portion 18. The terahertz wave device 1h is different from the above-described terahertz wave device 1g in the angle at which the second waveguide portion 18 is provided.

The length of the internal cavity of the second waveguide portion 18 in the first direction is longer than the length thereof in the second direction. Therefore, the second waveguide portion 18 extracts, from the output portion 14, the terahertz waves polarized in the second direction different from the first direction. The direction in which the cross-sectional shape of the internal cavity of the second waveguide portion 18 is short extends along the width direction of the second transmission path 12gb.

The structures of the first transmission path 12ga, the second transmission path 12gb, and the resonator structure 13g are the same as those of the terahertz wave transmission circuit 2g described above. However, when the terahertz waves polarized in the first direction are input to the input portion 11, and the terahertz waves polarized in the second direction are extracted from the output portion 14, the resonator structure 13g having the twisted structure functions as a transmission path (polarization rotation portion) through which the polarization direction of the terahertz waves is rotated. By changing both the angle of the twist and the angle of the second waveguide portion 18 in the terahertz wave device 1h, the polarization direction of the terahertz waves can be rotated by an optional angle. In this way, the terahertz wave device 1h can be used as an element that rotates the polarization direction of the terahertz waves.

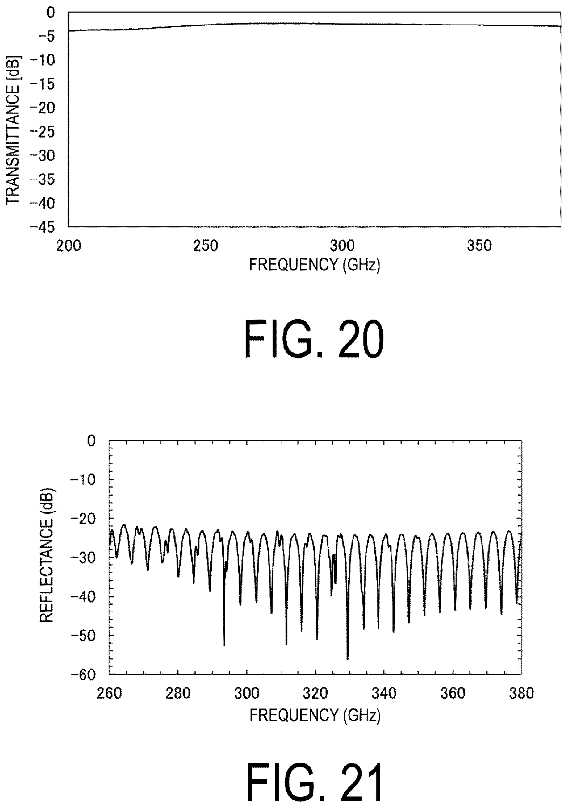

FIG. 20 is a diagram showing an electromagnetic simulation result for a change in the transmittance of the terahertz wave transmission circuit 2g in the terahertz wave device 1h with respect to frequency. When polarized waves in a rotational direction corresponding to the twist of the resonator structure 13g is extracted from the output portion 14, resonance characteristics are hardly observed in the change in the transmittance with respect to frequency, and high transmittance characteristics are obtained in a wide frequency range.

Conclusion

A terahertz wave transmission circuit according to aspect 1 of the present invention includes an input portion to which a terahertz wave is input, the input portion being formed of a dielectric, a transmission path connected to the input portion, and formed of a dielectric, and a resonator structure optically coupled to the transmission path, and formed of a dielectric.

According to the configuration described above, since the terahertz wave transmission circuit includes the resonator structure, resonance characteristics appear in a change in transmittance with respect to frequency. Thus, by comparing the FSR or the Q value dependent on the material and the structure of the dielectric with simulation results, the refractive index, the dielectric loss tangent, or the like dependent on the material can be obtained. Thus, the physical property of the dielectric with respect to the terahertz waves can be appropriately determined. Further, the terahertz wave transmission circuit can be used as a transmission circuit suitable for transmission of a signal in the terahertz band.

In a terahertz wave transmission circuit according to aspect 2 of the present invention, in aspect 1 described above, the resonator structure may have a ring-shaped structure.

According to the configuration described above, resonance characteristics corresponding to the length of the ring-shaped structure appear in a change in transmittance with respect to frequency.

In a terahertz wave transmission circuit according to aspect 3 of the present invention, in aspect 1 described above, the resonator structure may have a twisted structure.

In aspects 1 to 3 described above, a terahertz wave transmission circuit according to aspect 4 of the present invention may include a support supporting the input portion, the transmission path, or the resonator structure.

In a terahertz wave transmission circuit according to aspect 5 of the present invention, in aspect 4 described above, a plurality of pores may be formed in a boundary region of the support bordering the input portion, the transmission path, or the resonator structure, the plurality of pores being formed at a pitch less than a wavelength of the terahertz wave in the dielectric.

According to the configuration described above, leakage of the terahertz waves from the transmission path or the like to the support can be reduced.

In aspects 1 to 5 described above, a terahertz wave transmission circuit according to aspect 6 of the present invention may include an output portion connected to the transmission path, configured to output the terahertz wave, and formed of a dielectric.

A terahertz wave device according to aspect 7 of the present invention may include the terahertz wave transmission circuit according to aspect 3 described above. The terahertz wave transmission circuit may include an output portion connected to the transmission path, configured to output the terahertz wave, and formed of a dielectric. The terahertz wave device may further include a first waveguide portion configured to input, to the input portion, the terahertz wave polarized in a first direction, and a second waveguide portion configured to extract, from the output portion, the terahertz wave polarized in the first direction.

A method for measuring a physical property of a dielectric according to aspect 8 of the present invention includes: inputting the terahertz wave to the terahertz wave transmission circuit according to aspects 1 to 6 described above; measuring an output of the terahertz wave from the terahertz wave transmission circuit; and determining a physical property of the dielectric with respect to the terahertz wave by using the output.

In a method for measuring a physical property of a dielectric according to aspect 9, in aspect 8 described above, the determining the physical property may include determining a refractive index or a dielectric loss tangent of the dielectric with respect to the terahertz wave.

A terahertz wave device according to aspect 10 of the present invention includes: an input portion to which a terahertz wave is input, the input portion being formed of a dielectric; a transmission path connected to the input portion, having a twisted structure, and formed of a dielectric; an output portion connected to the transmission path, configured to output the terahertz wave, and formed of a dielectric; a first waveguide portion configured to input, to the input portion, the terahertz wave polarized in a first direction; and a second waveguide portion configured to extract, from the output portion, the terahertz wave polarized in a second direction different from the first direction.

According to the configuration described above, a circuit through which the polarization direction of the terahertz waves is rotated can be realized.

The present invention is not limited to the embodiments described above, and various modifications are possible within the scope of the claims, and embodiments obtained by appropriately combining technical means disclosed in different embodiments are also encompassed within the technical scope of the present invention.

Example

FIG. 21 is a diagram showing an example of a measurement result for a change in the transmittance of the terahertz wave transmission circuit 2 illustrated in FIG. 1 with respect to frequency. The vertical axis represents the transmittance [dB]. The horizontal axis represents the frequency [GHz] of the terahertz waves. As the dielectric, a resin containing polyoctenylene at 50 w% and BVPE (bis(vinylphenyl)ethane) at 50 w% was used. The actual measured values of transmittance also showed the resonance characteristics. The FSR at a certain frequency (299 GHz) read from the measurement result was 6.666 GHz. The refractive index of the dielectric was able to be determined to be 1.540 from the correspondence relationship between the refractive index and the FSR obtained from a separate simulation. Further, the Q value at the above frequency read from the measurement result was 156. From the correspondence relationship between the Q value and the dielectric loss tangent obtained from a separate simulation, the dielectric loss tangent of the dielectric was able to be determined to be 0.00566.

Reference Signs List

1, 1g, 1h Terahertz wave device
2. 2a, 2b, 2c, 2d, 2e, 2f, 2g Terahertz wave transmission circuit 11, 11b Input portion
12, 12f, 12g Transmission path
12ga First transmission path
12gb Second transmission path
13, 13c, 13d, 13f, 13g Resonator structure
13ba First resonator structure
13bb Second resonator structure

14, 14b Output portion
15, 15a Support
15ga First support
15gb Second support
16 Pore
17 First waveguide portion
18 Second waveguide portion

**Claims**

1. A terahertz wave transmission circuit comprising:

   an input portion to which a terahertz wave is input, the input portion being formed of a dielectric;
   a transmission path connected to the input portion, and formed of a dielectric; and
   a resonator structure optically coupled to the transmission path, and formed of a dielectric.

2. The terahertz wave transmission circuit according to claim 1, wherein the resonator structure has a ring-shaped structure.

3. The terahertz wave transmission circuit according to claim 1, wherein
   the resonator structure has a twisted structure.

4. The terahertz wave transmission circuit according to claim 1, comprising
   a support supporting the input portion, the transmission path, or the resonator structure.

5. The terahertz wave transmission circuit according to claim 4, wherein
   a plurality of pores are formed in a boundary region of the support bordering the input portion, the transmission path, or the resonator structure, the plurality of pores being formed at a pitch less than a wavelength of the terahertz wave in the dielectric.

6. The terahertz wave transmission circuit according to claim 1, comprising
   an output portion connected to the transmission path, configured to output the terahertz wave, and formed of a dielectric.

7. A terahertz wave device comprising:

   the terahertz wave transmission circuit according to claim 3, wherein
   the terahertz wave transmission circuit includes an output portion connected to the transmission path, configured to output the terahertz wave, and formed of a dielectric, and
   the terahertz wave device further comprises:

   a first waveguide portion configured to input, to the input portion, the terahertz wave polarized in a first direction; and
   a second waveguide portion configured to extract, from the output portion, the terahertz wave polarized in the first direction.

8. A method for measuring a physical property of a dielectric, the method comprising:

   inputting the terahertz wave to the terahertz wave transmission circuit according to any one of claims 1 to 6;
   measuring an output of the terahertz wave from the terahertz wave transmission circuit; and
   determining a physical property of the dielectric with respect to the terahertz wave by using the output.

9. The method for measuring a physical property of a dielectric according to claim 8, wherein
   the determining of the physical property includes determining a refractive index or a dielectric loss tangent of the dielectric with respect to the terahertz wave.

10. A terahertz wave device comprising:

    an input portion to which a terahertz wave is input, the input portion being formed of a dielectric;
    a transmission path connected to the input portion, having a twisted structure, and formed of a dielectric;
    an output portion connected to the transmission path, configured to output the terahertz wave, and formed of a dielectric;
    a first waveguide portion configured to input, to the input portion, the terahertz wave polarized in a first direction; and
    a second waveguide portion configured to extract, from the output portion, the terahertz wave polarized in a second direction different from the first direction.

# FIG. 1

# FIG. 2

START

S11
CHANGE/DECIDE ON
FREQUENCY

S12
INPUT TERAHERTZ WAVES
TO TERAHERTZ WAVE
TRANSMISSION CIRCUIT

S13
MEASURE OUTPUT OF
TERAHERTZ WAVES

S14
HAS
MEASUREMENT BEEN
COMPLETED FOR PREDETERMINED
FREQUENCY
RANGE?

NO

YES

S15
DETERMINE INTENSITY OF
INPUT TO TERAHERTZ WAVE
TRANSMISSION CIRCUIT

S16
DETERMINE TRANSMITTANCE
OF TERAHERTZ WAVE
TRANSMISSION CIRCUIT

END

FIG. 3

```
                    ( START )
                         |
                         |        S21
  ┌──────────────────────────────────┐
  │        DETERMINE FSR FROM         │
  │       MEASUREMENT RESULT          │
  └──────────────────────────────────┘
                         |        S22
  ┌──────────────────────────────────┐
  │ CALCULATE CHANGE IN TRANSMITTANCE │
  │   WITH RESPECT TO FREQUENCY AT    │
  │        PLURALITY OF               │
  │ REFRACTIVE INDEXES USING SIMULATION│
  └──────────────────────────────────┘
                         |        S23
  ┌──────────────────────────────────┐
  │      OBTAIN CORRESPONDENCE        │
  │  RELATIONSHIP BETWEEN REFRACTIVE  │
  │ INDEX AND FSR AT TARGET FREQUENCY │
  └──────────────────────────────────┘
                         |        S24
  ┌──────────────────────────────────┐
  │    DETERMINE REFRACTIVE INDEX     │
  │  CORRESPONDING TO FSR OBTAINED    │
  │    FROM MEASUREMENT RESULT        │
  └──────────────────────────────────┘
                         |        S25
  ┌──────────────────────────────────┐
  │     DETERMINE Q VALUE FROM        │
  │      MEASUREMENT RESULT           │
  └──────────────────────────────────┘
                         |        S26
  ┌──────────────────────────────────┐
  │ CALCULATE CHANGE IN TRANSMITTANCE │
  │   WITH RESPECT TO FREQUENCY AT    │
  │        PLURALITY OF               │
  │ DIELECTRIC LOSS TANGENTS USING    │
  │          SIMULATION               │
  └──────────────────────────────────┘
                         |        S27
  ┌──────────────────────────────────┐
  │ OBTAIN CORRESPONDENCE RELATIONSHIP│
  │ BETWEEN DIELECTRIC LOSS TANGENT   │
  │  AND Q VALUE AT TARGET FREQUENCY  │
  └──────────────────────────────────┘
                         |        S28
  ┌──────────────────────────────────┐
  │ DETERMINE DIELECTRIC LOSS TANGENT │
  │ CORRESPONDING TO Q VALUE OBTAINED │
  │    FROM MEASUREMENT RESULT        │
  └──────────────────────────────────┘
                         |
                    (  END  )
```

# FIG. 4

# FIG. 5

# FIG. 6

# FIG. 7

# FIG. 8

FIG. 9

FIG. 10

FIG. 11

# FIG. 12

# FIG. 13

2e

13d

13c

12

11b

14b

Y

Z⊗→X

# FIG. 14

2f

11b

12f

14b

13f

Y

Z⊗→X

# FIG. 15

FIG. 16

FIG. 17

FIG. 18

FIG. 19

FIG. 20

FIG. 21

# EP 4 671 738 A1

## INTERNATIONAL SEARCH REPORT

| | International application No. |
|---|---|
| | **PCT/JP2024/004582** |

### A. CLASSIFICATION OF SUBJECT MATTER

***G01N 21/3581***(2014.01)i; ***G01N 21/41***(2006.01)i; ***G01N 21/3563***(2014.01)i; ***G02B 6/122***(2006.01)i; ***H04B 1/04***(2006.01)i
FI: G01N21/3581; G01N21/41 Z; G01N21/3563; G02B6/122; H04B1/04 Z

According to International Patent Classification (IPC) or to both national classification and IPC

### B. FIELDS SEARCHED

Minimum documentation searched (classification system followed by classification symbols)

G01N21/00-21/958; G02B6/12-6/14; H04B1/02-1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus (JDreamIII); JST7580 (JDreamIII); JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | YU, B. et al. Ring-Resonator-Based Sub-THz Dielectric Sensor. IEEE Microwave and Wireless Components Letters. 2018, vol. 28, no. 11, pp. 969-971, DOI: 10.1109/LMWC.2018.2867092<br>pp. 969-970 | 1-2, 4, 6 |
| Y | pp. 969-970 | 4 |
| A | pp. 969-970 | 3, 5, 7-10 |
| X | JP 2018-17684 A (OSAKA UNIVERSITY) 01 February 2018 (2018-02-01)<br>paragraphs [0018]-[0064], fig. 1-7 | 1, 6 |
| Y | paragraphs [0018]-[0064], fig. 1-7 | 2, 4 |
| A | paragraphs [0018]-[0064], fig. 1-7 | 3, 5, 7-10 |
| Y | JP 2012-93165 A (KONICA MINOLTA HOLDINGS INC.) 17 May 2012 (2012-05-17)<br>paragraphs [0047]-[0048], [0057]-[0058], fig. 5, 8 | 2 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**24**

EP 4 671 738 A1

# INTERNATIONAL SEARCH REPORT

International application No.

**PCT/JP2024/004582**

## C.  DOCUMENTS CONSIDERED TO BE RELEVANT

| Category* | Citation of document, with indication, where appropriate, of the relevant passages | Relevant to claim No. |
|---|---|---|
| Y | JP 2010-511872 A (3M INNOVATIVE PROPERTIES COMPANY) 15 April 2010 (2010-04-15)<br>paragraphs [0021]-[0025], fig. 1 | 2 |
| A | KR 10-2020-0033710 A (HONGIK UNIVERSITY INDUSTRY-ACADEMIA COOPERATION FOUNDATION) 30 March 2020 (2020-03-30) | 1-10 |
| A | KR 10-2176113 B1 (KOREA MARITIME UNIVERSITY INDUSTRY-ACADEMIC COOPERATION FOUNDATION) 09 November 2020 (2020-11-09) | 1-10 |
| A | JP 2002-277394 A (TAKEDA, Mitsuo) 25 September 2002 (2002-09-25) | 1-10 |

Form PCT/ISA/210 (second sheet) (July 2022)

25

## INTERNATIONAL SEARCH REPORT
### Information on patent family members

International application No.

**PCT/JP2024/004582**

| Patent document cited in search report | | | Publication date (day/month/year) | Patent family member(s) | Publication date (day/month/year) |
|---|---|---|---|---|---|
| JP | 2018-17684 | A | 01 February 2018 | (Family: none) | |
| JP | 2012-93165 | A | 17 May 2012 | (Family: none) | |
| JP | 2010-511872 | A | 15 April 2010 | WO 2008/070438 A1 p. 7, line 5 to p. 8, line 11, fig. 1 WO 2008/070437 A1 WO 2008/070399 A2 WO 2008/070390 A2 WO 2008/070436 A1 WO 2008/094356 A1 US 2008/0129997 A1 US 2008/0291446 A1 US 2008/0131049 A1 US 2008/0159683 A1 US 2009/0310902 A1 US 2009/0310140 A1 US 2010/0158439 A1 CN 101542253 A CN 101542270 A CN 101573605 A CN 101548163 A CN 101548444 A CN 101573658 A JP 2010-511870 A JP 2010-511871 A JP 2010-511864 A JP 2010-511898 A JP 2010-515059 A | |
| KR 10-2020-0033710 | | A | 30 March 2020 | (Family: none) | |
| KR 10-2176113 | | B1 | 09 November 2020 | (Family: none) | |
| JP 2002-277394 | | A | 25 September 2002 | WO 2002/075291 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIRA NAFTALY**. Terahertz Time-Domain Spectroscopy for Material Characterization. *Proceedings of the IEEE*, 08 August 2007, vol. 95, 1658-1665